# FASCICULE DE BREVET EUROPEEN

(11) **EP 0 687 554 B1**
(45) Date de publication et mention de la délivrance du brevet: **15.05.2002**
(21) Numéro de dépôt: 95401392.6
(22) Date de dépôt: 15.06.1995
(51) Int. Cl.: B32B 17/10, C03C 3/087, C03C 4/08

(54) **Vitrage feuilleté à faible transmission énergétique pour véhicule de transport**
Verbundglassscheibe mit niedriger Energieübertragung für ein Transportfahrzeug
Laminated glazing with low energy transmission for a transport vehicle

(30) Priorité: 17.06.1994 FR 9407486
(43) Date de publication de la demande: 20.12.1995
(73) Titulaire: SAINT-GOBAIN GLASS FRANCE, 92400 Courbevoie (FR)
(72) Inventeur: Kraemling, Franz, Dr., D-52072 Aachen (DE); Raedisch, Helmer, Dr., D-52072 Aachen (DE); Schilde, Heinz, D-52146 Wuerselen (DE)
(74) Mandataire: Muller, René

(56) Documents cités:
- EP-A- 0 148 397
- EP-A- 0 452 207
- EP-A- 0 517 114
- EP-A- 0 536 049
- FR-A- 2 672 587
- GB-A- 2 057 355

## Description

La présente invention concerne un vitrage feuilleté pour véhicule de transport, et plus particulièrement un vitrage feuilleté à faible transmission énergétique pouvant être utilisé en tant que toit ou pavillon de véhicule automobile, ou encore en tant que vitrage latéral ou lunette arrière.

Les constructeurs automobiles proposent de plus en plus d'équiper leurs véhicules de toit en verre. Ce toit en verre donne plus de lumière à l'habitacle et procure notamment l'impression de rouler à ciel ouvert. La surface vitrée du toit et plus généralement la surface vitrée de l'ensemble du véhicule a en outre tendance à augmenter de plus en plus sur les nouveaux modèles. Cette augmentation de la surface pose plusieurs problèmes.

Un des problèmes est le réchauffement accru de l'habitacle du à l'effet de serre en cas de fort ensoleillement. Un autre problème concerne les propriétés de résistance mécanique de l'habitacle, en particulier le maintien de la rigidité de l'habitacle du véhicule. Se pose également le problème de la sécurité en cas d' accident, notamment de l'éjection à travers les vitrages latéraux, la lunette arrière et aussi le toit en verre.

Pour réduire l'effet de serre on a déjà proposé d'après la publication EP 0 452 207 un vitrage, utilisé notamment en tant que toit ouvrant de véhicule automobile, formé à partir d'un verre coloré dans la masse qui présente pour une épaisseur de 3,85 mm un facteur de transmission lumineuse globale sous illuminant A (TL_{A}) égal ou inférieur à environ 20 % et un facteur de transmission énergétique globale (TE) inférieur ou égal à environ 12 %.

Ce vitrage utilisé sous forme monolithique est satisfaisant en terme de confort thermique. Néanmoins, il ne procure pas une solution satisfaisante aux autres problèmes évoqués.

Pour résoudre à la fois le problème de l'effet de serre, le problème du maintien des propriétés mécaniques, notamment de la rigidité de l'habitacle du véhicule, et les problèmes de sécurité, l'invention propose un vitrage feuilleté comprenant au moins une feuille de verre teinté dans la masse et au moins une feuille en matière plastique contenant un agent absorbant le rayonnement UV, la ou les feuille(s) de verre et la ou les feuille(s) de matière plastique étant sélectionnées pour obtenir un facteur de transmission lumineuse TL_{A} inférieur à 60 % et un facteur de transmission énergétique TE tel que le rapport TL_{A}/TE soit supérieur à 1, ainsi qu'un facteur de transmission dans les UV (TUV) inférieur à 0,5 %, l'épaisseur totale du vitrage étant comprise entre 2,5 et 8 mm, ledit vitrage feuilleté ayant des caractéristiques supplémentaires conformément aux cinq variantes ci-dessous.

Selon une première variante, ledit verre teinté est un verre silico-sodo-calcique contenant en tant que colorant des oxydes de fer dans des proportions de 0,55 à 0,95 % en poids de Fe₂O₃ et de 0,11 à 0,22 % en poids de FeO tel que le rapport FeO/Fe₂O₃ soit de 0,19 à 0,35, au moins une feuille de matière plastique étant une feuille teintée. Ce verre teinté peut être un verre dont des formulations sont décrites par exemple dans le document EP-A-0 353 140. Ce verre présente un facteur de transmission TL_{A} élevé, généralement supérieur à 70 %, et son rapport TL_{A}/TE est très avantageusement supérieur à 1,3. Pour obtenir la transmission lumineuse recherchée selon l'invention, inférieure à 60 %, ces feuilles de verre sont associées à au moins une feuille intercalaire teintée, en particulier une feuille de polyvinylbutyral (PVB) teintée, et qui en outre contient au moins un agent absorbant les U.V afin de procurer un facteur TUV inférieur à 0,5 % et de préférence inférieur à 0,1 % pour le vitrage. Une feuille de PVB convenable est par exemple une feuille commercialisée sous l'appellation SAFLEX par la sociéte MONSANTO ou encore une feuille de PVB commercialisée sous l'appellation BUTACITE par la société DU PONT DE NEMOURS. Les feuilles de PVB convenables présentent un facteur TL_{A} inférieur à 60 % et un facteur TE tel que le rapport TL_{A}/TE du vitrage soit supérieur à 1.

Selon une deuxième variante, ledit verre teinté est un verre silico-sodo-calcique qui comprend, exprimés en pourcentages pondéraux, de 0,75 à 1,4 % de fer total exprimé sous la forme de Fe₂O₃, de 0,25 à 0,32 % de fer ferreux sous la forme de FeO et qui présente, sous une épaisseur comprise entre environ 3 et 3,3 millimètres, un facteur de transmission lumineuse globale sous illuminant A (T_{LA}) au moins égal à 70 %, un facteur de transmission énergétique globale (T_{E}) inférieur à 46 % et un facteur de transmission de radiations ultraviolettes inférieur à environ 25 %. Les valeurs de transmission lumineuse et énergétique ont été déterminées ici dans le cadre de l'invention selon la méthode Parry Moon Mass 2 ; la transmission dans l'ultraviolet a été déterminée selon la méthode définie par la norme ISO 9050.

Ces verres sont élaborés à partir de matières premières courantes dans des fours classiques utilisés dans le cadre de la technique du verre flotté. La fusion et l'affinage de ces verres a lieu dans des fours à flammes munis, éventuellement, d'électrodes assurant le chauffage du verre dans la masse par passage d'un courant électrique entre lesdites électrodes. Le degré d'oxydo-réduction de ces verres est contrôlé à l'aide d'agents oxydants, tel que le sulfate de sodium et d'agents réducteurs tel que du coke. La quantité de sulfate de sodium, introduite dans le mélange vitrifiable, considération prise des caractéristiques du four dans lequel ce mélange est fondu, est telle que la teneur en SO₃ dans le verre est généralement comprise entre 0,10 et 0,35 %.

La teneur en agents réducteurs associée au sulfate, considération prise également des caractéristiques du four d'élaboration du verre, est calculée de manière à ce que le degré d'oxydo-réduction dudit verre soit maintenu entre des limites précises. Ces limites sont définies par les valeurs extrêmes du rapport entre la quantité de fer ferreux exprimé sous la forme FeO et la quantité de fer total exprimé sous la forme Fe₂O₃. Ce rapport FeO/Fe₂O₃ varie ici de 0,22 à 0,34; il est de préférence compris entre 0,25 et 0,30.

Les verres utilisés dans la variante décrite ci-dessus sont des verres silico-sodo-calciques qui comprennent les constituants ci-après dans les teneurs définies par les limites suivantes exprimées en pourcentages pondéraux :

| | |
|---|---|
| SiO₂ | 64 à 75% |
| Al₂O₃ | 0 à 5% |
| B₂O₃ | 0 à 5% |
| CaO | 2 à 15% |
| MgO | 0 à 5% |
| Na₂O | 9 à 18% |
| K₂O | 0 à 5% |
| Fe₂O₃ | 0,75 à 1,4 % (fer total exprimé sous cette forme) |
| FeO | 0,25 à 0,32% |
| SO₃ | 0,10 à 0,35% |

Ces verres peuvent contenir en outre d'autres constituants considérés comme des impuretés et introduits par le biais des matières premières vitrifiables employées et/ou par le calcin de verres introduit dans le mélange vitrifiable et contenant en faible quantité des agents colorants autres que les oxydes de fer. Ces impuretés représentent moins de 0,1 % en poids du verre ; ce sont par exemple du titane, du cobalt, du nickel, du chrome, du sélénium ou du manganèse. Les verres selon l'invention contiennent, de préférence, de 0,8 à 1,3 % de fer total exprimé sous la forme de Fe₂O₃.

Outre les caractéristiques de transmission mentionnées précédemment, les verres utilisés dans cette variante selon l'invention présentent une teinte tirant sur le vert. Leur longueur d'onde dominante sous illuminant C est généralement comprise entre 490 et 505 nanomètres.

L'utilisation de ces verres est particulièrement intéressante dans la mesure où ils présentent une absorption notable des radiations infrarouges et ultraviolettes sous des épaisseurs relativement faibles.

Selon une troisième variante, ledit verre teinté est un verre silico-sodo-calcique qui comprend les constituants ci-après selon des teneurs exprimées en pourcentages pondéraux, définies par les limites suivantes :

| | |
|---|---|
| SiO₂ | 69 à 75 % |
| Al₂O₃ | 0 à 3% |
| CaO | 2 à 10 % |
| MgO | 0 à 2% |
| Na₂O | 9 à 17% |
| K₂O | 0 à 8% |
| Fe₂O₃ (fer total) | 0,2 à 1,5 |

Ces compositions sont susceptibles de contenir également du fluor, des oxydes de zinc, de zirconium, de cérium, de titane et moins de 4 % d'oxyde de baryum, la somme des pourcentages des oxydes alcalino-terreux demeurant égale ou inférieure à 10 %.

Dans cette composition de verre que l'on appelle ici verre « amagnésien », la silice est maintenue dans des limites relativement étroites pour les raisons suivantes :
* au-dessus d'environ 75 % la viscosité du verre et son aptitude à la dévitrification augmentent fortement ce qui rend beaucoup plus difficile sa fusion et sa coulée sur un bain d'étain,
* au-dessous de 69 % la résistance hydrolytique du verre décroît très rapidement et la transmission dans le visible diminue également.

Cette diminution de la résistance hydrolytique du verre peut être compensée, au moins en partie, par l'introduction de Al₂O₃, mais cet oxyde contribue à l'augmentation de sa viscosité et à une diminution de la transmission dans le visible ; il ne peut donc être utilisé qu'en quantité très limitée.

Les oxydes alcalins Na₂O et K₂O permettent de faciliter la fusion du verre et d'ajuster sa viscosité aux températures élevées afin de la maintenir proche de celle d'un verre standard.

K₂O peut être utilisé jusqu'à environ 8 %. Au-delà de ce pourcentage, l'augmentation du coût de la composition devient un handicap économique. Par ailleurs, l'augmentation du pourcentage de K₂O ne peut se faire, pour l'essentiel, qu'au détriment de Na₂O ce qui peut contribuer à l'augmentation de la viscosité. Toutefois, dans des conditions déterminées, la présence de K₂O permet d'augmenter l'absorption du verre dans l'infrarouge.

Les oxydes alcalino-terreux jouent un rôle déterminant dans l'obtention des propriétés des verres utilisés ici dans cette variante.

II a été en effet découvert que la limitation du pourcentage de MgO à 2 % et, de préférence, sa suppression dans les verres utilisés ici permettent d'augmenter leur capacité d'absorption dans l'infrarouge. La suppression de MgO, qui joue un rôle important sur la viscosité peut être compensée au moins en partie par l'augmentation de Na₂O.

CaO doit être limité à 10 % ; au-delà, l'aptitude du verre à la dévitrification augmente trop rapidement. BaO peut être ajouté dans les compositions utilisées ici dans des teneurs inférieures à 4 %.

En effet, BaO a une influence beaucoup plus faible que MgO et CaO sur la viscosité du verre. L'augmentation de BaO se fait essentiellement au détriment des oxydes alcalins, de MgO et surtout de CaO. Toute augmentation importante de BaO contribue donc à augmenter la viscosité du verre, notamment aux basses températures. De surcroît l'introduction d'un pourcentage élevé de BaO majore sensiblement le coût de la composition et a tendance a réduire la résistance hydrolytique du verre.

A ces considérations, il faut ajouter que l'introduction d'un faible pourcentage de BaO dans un verre contenant peu et, de préférence, pas de MgO, permet d'augmenter encore l'absorption des radiations infrarouges.

Pour obtenir les propriétés de transmission recherchées, il faut limiter la somme des pourcentages de MgO, CaO et BaO à une valeur égale ou inférieure à 10 %.

Les verres utilisés ici selon l'invention contiennent également des oxydes de fer dont les teneurs sont globalement exprimées sous la forme Fe₂O₃ (fer total).

Les verres utilisées ici peuvent également contenir jusqu'à 1 %, d'autres constituants apportés par les matières vitrifiables.

Une première série de compositions de verre « amagnésien » préférées utilisées ici selon l'invention comprend les constituants ci-après dans les limites pondérales suivantes :

| | |
|---|---|
| SiO₂ | 71 à 75 % |
| Al₂O₃ | 0 à 3% |
| CaO | 6 à 10 % |
| Na₂O | 12 à 17 % |
| Fe₂O₃ (fer total) | 0,2 à 1,5 % |

Ces verres sont, de préférence dénués de MgO ; ils sont éventuellement dénués de K₂O. Par le terme dénués, il faut comprendre que ces verres peuvent éventuellement contenir une très faible quantité des oxydes concernés apportés par les impuretés d'une matière première vitrifiable ou du fait de l'introduction de calcin dans le mélange vitrifiable.

Une autre série de compositions de verre « amagnésien » préférées utilisées ici selon l'invention comprend les constituants ci-après dans les limites pondérales suivantes :

| | |
|---|---|
| SiO₂ | 69 à 74% |
| Al₂O₃ | 0 à 3% |
| CaO | 2 à 7% |
| Na₂O | 10 à 15 % |
| K₂O | 2 à 7 % |
| Fe₂O₃ (fer total) | 0,2 à 1,5% |

Ces verres sont de préférence dénués de MgO.

Lorsque les verres utilisés ici contiennent de l'oxyde de baryum, le pourcentage de cet oxyde est, de préférence, compris entre 0,5 et 3,5 % en poids.

Les verres utilisés ici peuvent contenir également du fluor, de préférence entre 0,5 et 2 % en poids. Outre son action bien connue sur la fusion et la viscosité du verre, ce constituant a un effet spécifique sur l'absorption des radiations infrarouges, effet qui s'additionne à l'effet produit par la suppression de MgO et l'introduction de K₂O et BaO. Cet effet se traduit par un léger déplacement du maximum de la bande d'absorption dans l'infrarouge, mais surtout par un redressement de pente de ladite bande à l'extrémité du domaine du visible proche de l'infrarouge.

Les verres utilisés ici peuvent aussi contenir de l'oxyde de zinc. Cet oxyde permet de diminuer la viscosité du verre si nécessaire et contribue à augmenter la résistance hydrolytique du verre et à diminuer son aptitude à la dévitrification. C'est la raison pour laquelle ZnO est introduit de préférence dans les verres utilisés ici contenant un pourcentage élevé de silice et/ou ne contenant pas d'alumine. L'introduction de l'oxyde de zinc peut aussi éviter l'apparition d'une couleur ombre. Afin de ne pas majorer excessivement le coût de la composition, ZnO est introduit dans des proportions comprises entre 0,5 et 3 % en poids.

Les verres utilisés peuvent également contenir de l'oxyde de zirconium. Cet oxyde permet de stabiliser le verre et d'améliorer la résistance chimique du verre, en particulier sa résistance hydrolytique. Cet oxyde est introduit, de préférence, dans les verres contenant peu ou pas d'alumine dans des teneurs qui peuvent atteindre 1,5 % en poids.

Les verres utilisés peuvent également contenir de l'oxyde de cérium afin d'augmenter l'absorption des radiations UV. Les verres peuvent comprendre jusqu'à 1,5 % et, de préférence, de 0,3 à 0,8 % en poids de Ce₂O₃.

Les verres utilisés peuvent aussi contenir de l'oxyde de titane TiO₂ jusqu'à 1 % en poids. Cet oxyde permet d'absorber les radiations UV comme Ce₂O₃ qui est cependant plus cher.

Les verres « amagnésiens » utilisés peuvent être élaborés dans des conditions qui permettent d'atteindre le degré d'oxydo-réduction désiré. Ainsi les verres peuvent être élaborés en utilisant les agents d'affinage connus, tels que les sulfates, leur rédox étant inférieur à 0,35 et généralement compris entre 0,2 et 0,3. Les verres utilisés les moins riches en fer peuvent être aussi élaborés dans des conditions décrites, par exemple, par le brevet EP-B-297 404 et présenter un rédox supérieur à 0,4 ou 0,5 ; le rédox des verres reste toutefois inférieur à 0,8. Par rédox, il faut comprendre la valeur du rapport FeO/Fe₂O₃, FeO représentant le fer réellement sous la forme d'oxyde ferreux, Fe₂O₃ étant la quantité de fer total calculée sous cette forme.

Les facteurs de transmission lumineuse et énergétique globales des verres décrits ci-dessus dans cette variante sont tels que le rapport TL_{A}/T_{E} est généralement égal ou supérieur à 1,65 et même, pour la majorité d'entre eux, égal ou supérieur à 1,70, le facteur TL_{A} étant supérieur à 70 %.

Dans une quatrième variante, le verre teinté est un verre silico-sodo-calcique contenant en tant qu'agent colorant de 1,4 à 4 % d'oxyde de fer exprimé sous forme de Fe₂O₃ et tel que le facteur TL_{A} est égal ou inférieur à 20 % et le TE égal ou inférieur à 12 %, la feuille de matière plastique étant une feuille de PVB teintée. Le vitrage feuilleté utilise en tant que feuille de verre, un verre teinté à faible transmission lumineuse dont la composition comprend les constituants ci-après dans des proportions pondérales définies par les limites suivantes :
- SiO₂ : 64 à 75 %
- Al₂O₃ : 0 à 5%
- B₂O₃ : 0 à 5%
- CaO : 5 à 15 %
- MgO : 0 à 5%
- Na₂O : 10 à 18 %
- K₂O : 0 à 5%
- avec CaO + MgO compris entre 6 et 16 %,
- Na₂O + K₂O compris entre 10 et 20 %
et, à titre d'agents colorants, de 1,4 à 4 % d'oxyde de fer exprimé sous forme de Fe₂O₃, et éventuellement de l'oxyde de cobalt et/ou de l'oxyde de chrome, et/ou du sélénium, la somme de ces autres agents colorants pouvant atteindre 2400 ppm, qui présente, pour une épaisseur de 3,85 millimètres, une transmission lumineuse globale TL_{A} égale ou inférieure à environ 20 % et une transmission énergétique globale TE égale ou inférieure à environ 12 %.

D'une manière plus précise, la teneur en oxyde de cobalt peut atteindre environ 500 ppm et celle en sélénium environ 50 ppm.

Ces verres décrits notamment dans la publication EP-A-0 452 207 sont élaborés dans des conditions telles que leur rédox, c'est-à-dire, le rapport de la quantité d'oxyde ferreux à la quantité totale de fer, les deux étant exprimés sous forme d'oxyde ferrique, demeure égal ou inférieur à environ 0,40.

Au moins une de ces feuilles de verre peut être associée à une feuille intercalaire contenant au moins un agent absorbant les UV pour l'obtention du vitrage selon l'invention.

En cinquième variante, on peut encore utiliser en tant que feuille de verre teinté dans la masse, le verre décrit dans la publication EP-A-0 536 049 qui comprend en tant qu'agents colorants de 0,45 à 2,5 % de Fe₂O₃ (fer total), 0,001 à 0,02 % de CoO, de 0 à 0,0025 % de Se et de 0 à 0,1 % de Cr₂O₃, ces verres ayant un facteur de transmission énergétique globale TE compris entre 10 et 48 % un facteur TL_{A} compris entre 20 et 60 % pour une épaisseur de 3,85 millimètres, le rapport TL_{A}/TE étant supérieur à 1, et la feuille de matière plastique étant une feuille teintée.

La structure feuilletée selon l'invention outre ses caractéristiques optiques et thermiques présente des propriétés mécaniques de résistance aux chocs et à la pénétration, ou encore des propriétés d'anti-éjection en cas d'accident. Elle assure aussi le maintien de la rigidité de l'habitacle.

Dans une forme de réalisation du vitrage feuilleté selon l'invention, celui-ci est constitué de deux feuilles de verre et d'une feuille intercalaire. Dans cette forme de réalisation, une ou de préférence les deux feuilles de verre sont obtenues à partir d'un verre silico-sodo-calcique teinté dans sa masse notamment par des oxydes de fer, ce verre possédant notamment des propriétés d'absorption du rayonnement IR, et plus généralement une fonctionnalité anti-solaire.

Le vitrage feuilleté selon l'invention offre une impression de confort accrue grâce à un rapport optimisé entre la lumière incidente et l'apport de chaleur.

Dans l'application en tant que toit ou pavillon d'automobile, le vitrage selon l'invention présente avantageusement un facteur TL_{A} compris entre 5 % et 25 %.

Dans une forme de réalisation préférée du vitrage dans cette application, notamment au regard du confort procuré, on sélectionne les feuilles de verre et la ou les couches intercalaires constitutives, de manière à obtenir un TL_{A} inférieur à 20 %, un rapport TL_{A}/TE supérieur à 1,2 pour une épaisseur totale comprise entre 3 et 8 mm.

Utilisé dans cette application en tant que toit ou pavillon d'automobile et ce même avec une grande surface vitrée, il montre en termes de transfert d'énergie thermique des caractéristiques très proches d'un toit ou pavillon traditionnel en tôle revêtue.

En particulier, lorsqu'un véhicule équipé du toit en verre selon l'invention est placé dans des conditions d'ensoleillement naturel, il présente une courbe de température d'habitacle quasi identique à la courbe obtenue pour l'habitacle d'un véhicule non équipé du vitrage selon l'invention placé dans les mêmes conditions d'ensoleillement.

Une autre caractéristique du vitrage selon l'invention est un facteur de réflexion inférieur à 6 %. Un faible facteur de réflexion procure un plus grand confort de conduite surtout la nuit.

Dans l'application en tant que vitrage latéral ou lunette arrière de véhicule automobile, le vitrage selon l'invention présente avantageusement un facteur TL_{A} compris entre 20 % et 55 % pour une épaisseur comprise entre 2,5 et 5 mm.

Selon une forme de réalisation du vitrage selon l'invention, celui-ci présente la structure d'un vitrage asymétrique comprenant une seule feuille de verre et une feuille de matière plastique. Des vitrages asymétriques sont décrits par exemple dans les publications de brevet FR-A-2 398 606, EP-A-132 198, JP-A-86 177 241, JP-A-86 281 118. Des vitrages asymétriques convenables entrant dans le cadre de l'invention sont formés à partir d'une feuille de verre possédant un rapport TL_{A}/TE supérieur à 1, comme décrit précédemment et d'une feuille de matière plastique contenant au moins un agent absorbant les UV, cette feuille pouvant être à base d'au moins une couche de polyuréthane, ces éléments étant sélectionnés pour atteindre les caractéristiques désirées en termes de facteurs TL_{A}, TE, TUV.

D'autres avantages et caractéristiques apparaitront dans la description suivante d'exemples de vitrages selon l'invention.

### EXEMPLE 1

On fabrique un vitrage pour toit pour véhicule à moteur, d'environ 1 m₂ de surface, à partir de deux feuilles de verre de 3,15 mm d'épaisseur en un verre silico-sodo-calcique teinté contenant des oxydes colorants, à raison de 0,75 à 0,90 % de Fe₂O₃, 0,15 à 0,22 % de FeO, avec FeO/Fe₂O₃ total = 0,30 environ, avec une faible proportion de CoO, inférieure à 17 ppm, ces proportions étant exprimées en poids par rapport à la composition verrière totale.

Ce verre présente en 3,85 mm d'épaisseur un TL_{A} de l'ordre de 72 % et un TE de l'ordre de 44 %, ce qui conduit à un rapport TL_{A}/TE de l'ordre de 1,6.

Les deux feuilles de verre sont assemblées à l'aide d'une feuille de PVB teintée, de 1,14 mm d'épaisseur. Une feuille convenable est par exemple une feuille de PVB commercialisée sous l'appellation SAFLEX SR 654 400. Cette feuille contient des agents absorbants les UV et elle présente un TL de 40 %, un TE de 48 % et un TUV de 0 % sous une épaisseur de 0,38 mm.

Le vitrage finalement obtenu présente les caractéristiques suivantes : TL_{A} de 7 %, TE de 6 %, TUV de 0 %.

### EXEMPLE 2

On fabrique un vitrage pour toit de véhicule à partir de deux feuilles de verre de 2,1 mm d'épaisseur en verre silico-sodo-calcique fortement teinté. Les caractéristiques du verre pour une épaisseur de 3,85 mm sont un TL_{A} de 10 % environ et un TE de 5 % environ.

Les deux feuilles de verre sont assemblées à l'aide d'une feuille intercalaire de 0,76 mm d' épaisseur en PVB coloré présentant un TL de 40 %, un TE de 48 % et un TUV de 0 % sous une épaisseur de 0,38 mm.

Le vitrage finalement obtenu présente un TL de 5 %, un TE de 2 % et un TUV de 0 %.

### EXEMPLE 3

On fabrique un vitrage pour latéral arrière de véhicule à moteur par assemblage de deux feuilles de verre de composition comme décrit dans l'exemple 1, de 2 mm d'épaisseur et d'une feuille intercalaire de 0,38 mm d'épaisseur en PVB coloré comme décrit dans l'exemple 1.

On obtient finalement un vitrage feuilleté dont les caractéristiques sont les suivantes :
TLA de 31 %, TE de 25 %, TUV de 0 %.

On doit noter que l'addition d'une feuille de PVB ne fait pas perdre comme on pouvait le craindre la fonctionnalité antisolaire des feuilles de verre, c'est-à-dire le bon rapport TL_{A}/TE, qui reste supérieur à 1 et avantageusement supérieur à 1,2.

En choisissant la ou les feuilles de verre ayant une fonctionnalité antisolaire adaptée et la ou les feuilles de matière plastique colorée(s), ainsi que leur nombre, on peut obtenir en outre une large palette de couleurs et de nuances pour le vitrage tout en conservant un produit ayant de bonnes propriétés antisolaires.

On peut aussi de cette façon obtenir un dégradé dans une même couleur de base et, dans le cadre de l'équipement d'un véhicule automobile par exemple, prévoir en partant des vitrages latéraux jusqu'à la lunette arrière des vitrages allant du plus clair au plus foncé.

## Revendications

1. Vitrage à faible transmission énergétique pour véhicule de transport, **caractérisé en ce qu'**il présente une structure feuilletée comprenant au moins une feuille de verre teinté dans sa masse, ayant une fonctionnalité anti-solaire, et au moins une feuille de matière plastique contenant un agent absorbant les UV, au moins une feuille de verre et au moins une feuille de matière plastique étant sélectionnées pour obtenir un facteur de transmission lumineuse TL_{A} inférieur à 60%, un facteur de transmission énergétique TE tel que le rapport TL_{A}/TE soit supérieur à 1 et un facteur de transmission TUV inférieur à 0,5%, l'épaisseur totale du vitrage étant comprise entre 2,5 et 8 mm, **en ce que** le verre teinté est un verre silico-sodo-calcique contenant en tant que colorant des oxydes de fer dans des proportions de 0,55 à 0,95% en poids de Fe₂O₃ et de 0,11 à 0,22% en poids de FeO tel que le rapport FeO/Fe₂O₃ total soit de 0,19 à 0,35, et **en ce que** au moins une feuille de matière plastique est une feuille teintée.

2. Vitrage à faible transmission énergétique pour véhicule de transport, **caractérisé en ce qu'**il présente une structure feuilletée comprenant au moins une feuille de verre teinté dans sa masse, ayant une fonctionnalité anti-solaire, et au moins une feuille de matière plastique contenant un agent absorbant les UV, au moins une feuille de verre et au moins une feuille de matière plastique étant sélectionnées pour obtenir un facteur de transmission lumineuse TL_{A} inférieur à 60%, un facteur de transmission énergétique TE tel que le rapport TL_{A}/TE soit supérieur à 1 et un facteur de transmission TUV inférieur à 0,5%, l'épaisseur totale du vitrage étant comprise entre 2,5 et 8 mm, **en ce que** le verre teinté est un verre silico-sodo-calcique, qui comprend, exprimé en pourcentages pondéraux de 0,75 à 1,4% de fer total exprimé sous la forme de Fe₂O₃, de 0,25 à 0,32% de fer ferreux, sous la forme de FeO et qui présente, sous une épaisseur comprise entre environ 3 et 3,3 millimètres, un facteur de transmission globale sous illuminant A au moins égal à 70%, un facteur de transmission énergétique globale inférieur à 46% et un facteur de transmission des radiations ultraviolettes inférieur à 25%.

3. Vitrage selon la revendication 2, **caractérisé en ce que** le verre comprend les constituants ci-après dans les teneurs définies par les limites suivantes exprimées en pourcentages pondéraux :
| | |
|---|---|
| SiO₂ | 64 à 75% |
| Al₂O₃ | 0 à 5% |
| B₂O₃ | 0 à 5% |
| CaO | 2 à 15% |
| MgO | 0 à 5% |
| Na₂O | 9 à 18% |
| K₂O | 0 à 5% |
| Fe₂O₃ | 0,75 à 1,4% (fer total exprimé sous cette forme) |
| FeO | 0,25 à 0,32% |
| SO₃ | 0,10 à 0,35% |
et, éventuellement, moins de 0,1 % d'impuretés.

4. Vitrage à faible transmission énergétique pour véhicule de transport, **caractérisé en ce qu'**il présente une structure feuilletée comprenant au moins une feuille de verre teinté dans sa masse, ayant une fonctionnalité anti-solaire, et au moins une feuille de matière plastique contenant un agent absorbant les UV, au moins une feuille de verre et au moins une feuille de matière plastique étant sélectionnées pour obtenir un facteur de transmission lumineuse TL_{A} inférieur à 60%, un facteur de transmission énergétique TE tel que le rapport TL_{A}/TE soit supérieur à 1 et un facteur de transmission TUV inférieur à 0,5%, l'épaisseur totale du vitrage étant comprise entre 2,5 et 8 mm, **en ce que** le verre teinté est un verre silico-sodo-calcique comprenant les constituants ci-après selon des teneurs, exprimées en pourcentages pondéraux, définies par les limites suivantes :
| | |
|---|---|
| SiO₂ | 69 à 75% |
| Al₂O₃ | 0 à 3% |
| CaO | 2 à 10% |
| MgO | 0 à 2% |
| Na₂O | 9 à 17% |
| K₂O | 0 à 8% |
| Fe₂O₃ | 0,2 à 1,5% |
ces compositions étant susceptibles de contenir également du fluor, des oxydes de zinc, de zirconium, de cérium, de titane et moins de 4% d'oxyde de baryum, la somme des pourcentages des oxydes alcalino-terreux demeurant égale ou inférieure à 10%.

5. Vitrage à faible transmission énergétique pour véhicule de transport, **caractérisé en ce qu'**il présente une structure feuilletée comprenant au moins une feuille de verre teinté dans sa masse, ayant une fonctionnalité anti-solaire, et au moins une feuille de matière plastique contenant un agent absorbant les UV, au moins une feuille de verre et au moins une feuille de matière plastique étant sélectionnées pour obtenir un facteur de transmission lumineuse TL_{A} inférieur à 60%, un facteur de transmission énergétique TE tel que le rapport TL_{A}/TE soit supérieur à 1 et un facteur de transmission TUV inférieur à 0,5%, l'épaisseur totale du vitrage étant comprise entre 2,5 et 8 mm, **en ce que** le verre teinté est un verre silico-sodo-calcique contenant en tant qu'agent colorant de 1,4 à 4% d'oxyde de fer exprimé sous forme de Fe₂O₃ et tel que le facteur TL_{A} est égal ou inférieur à 20% et le TE égal ou inférieur à 12% et **en ce que** la feuille de matière plastique est une feuille de PVB teintée.

6. Vitrage selon une des revendications 1 à 5, **caractérisé en ce que** son facteur de réflexion est inférieur à 6%.

7. Vitrage selon une des revendications 1 à 6, **caractérisé en ce qu'**il comprend deux feuilles de verre et au moins une couche intercalaire.

8. Vitrage selon une des revendications 1 à 6, **caractérisé en ce qu'**il comprend une seule feuille de verre et une feuille de matière plastique comprenant au moins deux couches.

9. Vitrage selon une des revendications 1 à 8, **caractérisé en ce qu'**il présente des propriétés anti-éjection.

10. Vitrage selon une des revendications 1 à 9, **caractérisé en ce qu'**il présente des propriétés anti-effraction.

11. Utilisation du vitrage selon une des revendications 1 à 10, en tant que toit ou pavillon d'un véhicule automobile, le facteur TL_{A} étant compris entre 5 et 25%.

12. Utilisation du vitrage selon une des revendications 1 à 10, en tant que vitrage latéral arrière ou lunette arrière d'un véhicule automobile, le facteur TL_{A} étant compris entre 20 et 55%.

## Patentansprüche

1. Glas mit niedrigem Strahlungstransmissionsgrad für Transportfahrzeuge, **dadurch gekennzeichnet, dass** es einen Verbundaufbau besitzt, der mindestens eine eingefärbte Glasscheibe mit Sonnenschutzfunktion und mindestens eine einen UV-Filter enthaltende Kunststofffolie, mindestens eine Glasscheibe und mindestens eine Kunststofffolie umfasst, die derart ausgewählt sind, dass ein Lichttransmissionsgrad T_{LA} von unter 60 %, ein solcher Strahlungstransmissionsgrad T_{E}, dass das Verhältnis von T_{LA}/T_{E} größer als 1 ist, und ein UV-Transmissionsgrad T_{UV} von unter 0,5 % erhalten wird, wobei die Gesamtdicke des Glases 2,5 bis 8 mm beträgt, **dass** das Farbglas ein Kalk-Natron-Silicatglas ist, das als Farbmittel Eisenoxid in Anteilen von 0,55 bis 0,95 Gew.-% Fe₂O₃ und 0,11 bis 0,22 Gew.-% FeO derart enthält, dass das Verhältnis von FeO/Gesamt-Fe₂O₃ 0,19 bis 0,35 beträgt, **und dass** mindestens eine Kunststofffolie eingefärbt ist.

2. Glas mit niedrigem Strahlungstransmissionsgrad für Transportfahrzeuge, **dadurch gekennzeichnet, dass** es einen Verbundaufbau besitzt, der mindestens eine eingefärbte Glasscheibe mit Sonnenschutzfunktion und mindestens eine einen UV-Filter enthaltende Kunststofffolie, mindestens eine Glasscheibe und mindestens ein Kunststofffolie umfasst, die derart ausgewählt sind, dass ein Lichttransmissionsgrad T_{LA} von unter 60 %, ein solcher Strahlungstransmissionsgrad T_{E}, dass das Verhältnis von T_{LA}/T_{E} größer als 1 ist, und ein UV-Transmissionsgrad T_{UV} von unter 0,5 % erhalten wird, wobei die Gesamtdicke des Glases 2,5 bis 8 mm beträgt, **dass** das Farbglas ein Kalk-Natron-Silicatglas ist, das, in Gewichtsanteilen angegeben, 0,75 bis 1,4 % in Form von Fe₂O₃ ausgedrücktes Gesameisen und 0,25 bis 0,32 % zweiwertiges Eisen in Form von FeO enthält und bei einer Dicke von etwa 3 bis 3,3 Millimetern einen globalen Lichttransmissionsgrad für Normlichtart A von mindestens 70 %, einen Strahlungstransmissionsgrad für Globalstrahlung von unter 46 % und einen UV-Transmissionsgrad von unter 25 % aufweist.

3. Glas nach Anspruch 2, **dadurch gekennzeichnet, dass** es folgende Bestandteile innerhalb nachstehender Gewichtsgrenzen:
| | |
|---|---|
| SiO₂ | 64 bis 75 % |
| Al₂O₃ | 0 bis 5 % |
| B₂O₃ | 0 bis 5 % |
| CaO | 2 bis 15 % |
| MgO | 0 bis 5 % |
| Na₂O | 9 bis 18 % |
| K₂O | 0 bis 5 % |
| Fe₂O₃ | 0,75 bis 1,4 % (Gesamteisen, angeg. in dieser Form) |
| FeO | 0,25 bis 0,32 % |
| SO₃ | 0,10 bis 0,35 % |
und gegebenenfalls weniger als 0,1 % Verunreinigungen umfasst.

4. Glas mit niedrigem Strahlungstransmissionsgrad für Transportfahrzeuge, **dadurch gekennzeichnet, dass** es einen Verbundaufbau besitzt, der mindestens eine eingefärbte Glasscheibe mit Sonnenschutzfunktion und mindestens eine einen UV-Filter enthaltende Kunststofffolie, mindestens eine Glasscheibe und mindestens ein Kunststofffolie umfasst, die derart ausgewählt sind, dass ein Lichttransmissionsgrad T_{LA} von unter 60 %, ein solcher Strahlungstransmissionsgrad T_{E}, dass das Verhältnis von T_{LA}/T_{E} größer als 1 ist, und ein UV-Transmissionsgrad T_{UV} von unter 0,5 % erhalten wird, wobei die Gesamtdicke des Glases 2,5 bis 8 mm beträgt, **und dass** das Farbglas ein Kalk-Natron-Silicatglas ist, das folgende Bestandteile innerhalb nachstehender Gewichtsgrenzen:
| | |
|---|---|
| SiO₂ | 69 bis 75 % |
| Al₂O₃ | 0 bis 3 % |
| CaO | 2 bis 10 % |
| MgO | 0 bis 2 % |
| Na₂O | 9 bis 17 % |
| K₂O | 0 bis 8 % |
| Fe₂O₃ | 0,2 bis 1,5 % |
umfasst, wobei diese Zusammensetzungen auch Fluor, Zink-, Zirconium-, Cer- und Titanoxid und weniger als 4 % Bariumoxid enthalten können und die Summe der Prozentanteile der Erdalkalioxide gleich oder kleiner als 10 % bleibt.

5. Glas mit niedrigem Strahlungstransmissionsgrad für Transportfahrzeuge, **dadurch gekennzeichnet, dass** es einen Verbundaufbau besitzt, der mindestens eine eingefärbte Glasscheibe mit Sonnenschutzfunktion und mindestens eine einen UV-Filter enthaltende Kunststofffolie, mindestens eine Glasscheibe und mindestens eine Kunststofffolie umfasst, die derart ausgewählt sind, dass ein Lichttransmissionsgrad T_{LA} von unter 60 %, ein solcher Strahlungstransmissionsgrad T_{E}, dass das Verhältnis von T_{LA}/T_{E} größer als 1 ist, und ein UV-Transmissionsgrad T_{UV} von unter 0,5 % erhalten wird, wobei die Gesamtdicke des Glases 2,5 bis 8 mm beträgt, **dass** das Farbglas ein Kalk-Natron-Silicatglas ist, das als Farbmittel 1,4 bis 4 % in Form von Fe₂O₃ angegebenes Eisenoxid enthält und der Lichttransmissionsgrad T_{LA} gleich oder kleiner als 20 % und T_{E} gleich oder kleiner als 12 % ist, **und dass** die Kunststofffolie eine eingefärbte PVB-Folie ist.

6. Glas nach einem der Ansprüche 1 bis 5, **dadurch gekennzeichnet, dass** sein Lichtreflexionsgrad weniger als 6 % beträgt.

7. Glas nach einem der Ansprüche 1 bis 6, **dadurch gekennzeichnet, dass** es zwei Glasscheiben und mindestens eine Zwischenschicht umfasst.

8. Glas nach einem der Ansprüche 1 bis 6, **dadurch gekennzeichnet, dass** es eine einzige Glasscheibe und eine Kunststofffolie umfasst, die mindestens zwei Schichten enthält.

9. Glas nach einem der Ansprüche 1 bis 8, **dadurch gekennzeichnet, dass** es vor dem Hinausgeschleudertwerden schützende Eigenschaften besitzt.

10. Glas nach einem der Ansprüche 1 bis 9, **dadurch gekennzeichnet, dass** es angriffhemmende Eigenschaften besitzt.

11. Verwendung des Glases nach einem der Ansprüche 1 bis 10 als Dach oder Oberteil eines Kraftfahrzeugs, wobei der Lichttransmissionsgrad T_{LA} 5 bis 25 % beträgt.

12. Verwendung des Glases nach einem der Ansprüche 1 bis 10 als hintere Seitenscheibe oder Heckscheibe eines Kraftfahrzeugs, wobei der Lichttransmissionsgrad T_{LA} 20 bis 55 % beträgt.

## Claims

1. Glazing having a low energy transmission for a transportation vehicle, **characterized in that** it has a laminated structure with at least one pot coloured glass sheet, having a sun shielding function and at least one plastics material sheet containing a UV-absorbing agent, at least one glass sheet and at least one plastics material sheet being chosen so as to obtain a light transmission factor TL_{A} below 60%, an energy transmission factor TE such that the ratio TL_{A}/TE exceeds 1 and a TUV transmission factor below 0.5%, the total thickness of the glazing between 2.5 and 8 mm, **in that** the tinted glass is a soda-lime-silica glass containing as the colouring agent iron oxides in proportions of 0.55 to 0.95 wt.% Fe₂O₃ and 0.11 to 0.22 wt.% FeO, such that the total FeO/Fe₂O₃ ratio is 0.19 to 0.35 and **in that** at least one plastics material sheet is a tinted sheet.

2. Glazing having a low energy transmission for a transportation vehicle, **characterized in that** it has a laminated structure with at least one pot coloured glass sheet, having a sun shielding function and at least one plastics material sheet containing a UV-absorbing agent, at least one glass sheet and at least one plastics material sheet being chosen so as to obtain a light transmission factor TL_{A} below 60%, an energy transmission factor TE such that the ratio TL_{A}/TE exceeds 1 and a TUV transmission factor below 0.5%, the total thickness of the glazing between 2.5 and 8 mm, **in that** the tinted glass is a soda-lime-silica glass, which comprises, expressed in weight percentages, 0.75 to 1.4% total iron expressed in the form Fe₂O₃, 0.25 to 0.32% ferrous iron, in the form FeO and which has, for a thickness between approximately 3 and 3.3 millimetres, a total transmission factor under illuminant A of at least 70%, a total energy transmission factor below 46% and an ultraviolet radiation transmission factor below 25%.

3. Glazing according to claim 2, **characterized in that** the glass comprises the following constituents in the contents defined by the following limits expressed as percentages by weight:
| | |
|---|---|
| SiO₂ | 64 to 75% |
| Al₂O₃ | 0 to 5% |
| B₂O₃ | 0 to 5% |
| CaO | 2 to 15% |
| MgO | 0 to 5% |
| Na₂O | 9 to 18% |
| K₂O | 0 to 5% |
| Fe₂O₃ | 0.75 to 1.4% (total iron expressed in this form) |
| FeO | 0.25 to 0.32% |
| SO₃ | 0.10 to 0.35% |
and optionally less than 0.1% impurities.

4. Glazing having a low energy transmission for a transportation vehicle, **characterized in that** it has a laminated structure with at least one pot coloured glass sheet, having a sun shielding function and at least one plastics material sheet containing a UV-absorbing agent, at least one glass sheet and at least one plastics material sheet being chosen so as to obtain a light transmission factor TL_{A} below 60%, an energy transmission factor TE such that the ratio TL_{A}/TE exceeds 1 and a TUV transmission factor below 0.5%, the total thickness of the glazing between 2.5 and 8 mm, **in that** the tinted glass is a soda-lime-silica glass comprising the following constituents in accordance with the contents, expressed as weight percentages, defined by the following limits:
| | |
|---|---|
| SiO₂ | 69 to 75% |
| Al₂O₃ | 0 to 3% |
| CaO | 2 to 10% |
| MgO | 0 to 2% |
| Na₂O | 9 to 17% |
| K₂O | 0 to 8% |
| Fe₂O₃ | 0.2 to 1.5% |
said compositions also being able to contain fluorine, zinc, zirconium, cerium and titanium oxides and less than 4% barium oxide, the sum of the alkaline earth oxide percentages remaining equal to or below 10%.

5. Glazing having a low energy transmission for a transportation vehicle, **characterized in that** it has a laminated structure with at least one pot coloured glass sheet, having a sun shielding function and at least one plastics material sheet containing a UV-absorbing agent, at least one glass sheet and at least one plastics material sheet being chosen so as to obtain a light transmission factor TL_{A} below 60%, an energy transmission factor TE such that the ratio TL_{A}/TE exceeds 1 and a TUV transmission factor below 0.5%, the total thickness of the glazing between 2.5 and 8 mm, **in that** the tinted glass is a soda-lime-silica glass containing as the colouring agent 1.4 to 4% iron oxide expressed in the form Fe₂O₃ and such that the factor TL_{A} is equal to or below 20% and the FE equal to or below 12% and **in that** the plastics material sheet is a tinted PVB sheet.

6. Glazing according to one of the claims 1 to 5, **characterized in that** its reflection factor is below 6%.

7. Glazing according to one of the claims 1 to 6, **characterized in that** it comprises two glass sheets and at least one interlayer.

8. Glazing according to one of the claims 1 to 6, **characterized in that** it comprises a single glass sheet and a plastics material sheet incorporating at least two layers.

9. Glazing according to one of the claims 1 to 8, **characterized in that** it has anti-ejection properties.

10. Glazing according to one of the claims 1 to 9, **characterized in that** it has burglar-proof properties.

11. Use of the glazing according to one of the claims 1 to 10 as a roof for a car, the factor TL_{A} being between 5 and 25%.

12. Use of the glazing according to one of the claims 1 to 10 as a rear side glazing or rear window of a car, the factor TL_{A} being between 20 and 55%.
